Europäisches Patentamt

European Patent Office

Office européen des brevets

(11) Veröffentlichungsnummer : **0 094 439 B1**

(12) # EUROPÄISCHE PATENTSCHRIFT

(45) Veröffentlichungstag der Patentschrift :
30.12.86

(51) Int. Cl.⁴ : **F 16 L 37/28**

(21) Anmeldenummer : **82104164.7**

(22) Anmeldetag : **13.05.82**

(54) Ventilkupplung für fluidische Systeme.

(43) Veröffentlichungstag der Anmeldung :
**23.11.83 Patentblatt 83/47**

(45) Bekanntmachung des Hinweises auf die Patenterteilung : **30.12.86 Patentblatt 86/52**

(84) Benannte Vertragsstaaten :
**AT BE CH DE FR GB IT LI LU NL SE**

(56) Entgegenhaltungen :
**FR-A- 1 402 040**
**GB-A- 2 069 083**
**US-A- 2 268 020**

(73) Patentinhaber : **Hydrotechnik GmbH**
**Holzheimer Strasse 94-96**
**D-6250 Limburg 1 (DE)**

(72) Erfinder : **Hoffmann, Helmuth**
**Albert-Einstein-Strasse 5**
**D-5060 Bergisch-Gladbach (DE)**

(74) Vertreter : **Linser, Heinz**
**Patentanwälte Heinz Linser Dipl. Ing. Eckhardt Eyer**
**Robert-Bosch-Strasse 12a Postfach 10 22 10**
**D-6072 Dreieich (DE)**

EP 0 094 439 B1

## Beschreibung

Die Erfindung betrifft eine Ventilkupplung, insbesondere Ventil-Meßkupplung für fluidische Systeme mit hohen Arbeitsdrücken, bestehend aus einer unter Leitungsdruck stehenden Kupplungsbuchse, in deren Bohrung ein federbelastetes und mechanisch betätigbares Rückschlagventil mit einem zylindrischen Ventilkörper angeordnet ist, welcher mit der Außenkante und/oder Stirnfläche seiner Dichtschulter im geschlossenen Ventilzustand gegen einen Dichtring preßt, der mit der Kupplungsbuchse bzw. einer in der Kupplungsbuchse angeordneten Dichtbuchse einen abdichtbaren Strömungskanal bildet.

Ventilkupplungen dieser Art dienen zum Beispiel zur Herstellung von Prüf- oder Meßanschlüssen an Druckleitungen, wobei in der Regel die Kupplungsbuchse mit Außengewinde fest an der Druckleitung eines zum Beispiel Hydraulik- oder Pneumatiksystems installiert ist. Für die Dauer der Prüf- oder Meßarbeiten wird auf diese Kupplungsbuchse ein als Hohlzapfen ausgebildeter Dichtnippel mittels Überwurfmutter aufgeschraubt, der fest mit einem Schlauch verbunden ist. Die Kupplungen können beispielsweise unter Druck, d. h. ohne die Anlage stillzusetzen, über Meßschläuche mit den entsprechenden Meßgeräten verbunden werden. Bei Anschluß fest installierter Geräte, zum Beispiel Manometer, Manometer-Wahlschaltern und Druckschaltern können die flexiblen Meßschläuche wie Elektrokabel verlegt werden, so daß eine aufwendige Rohrverlegung entfällt. Mit solchen Meßkupplungen lassen sich daher die effektiven Arbeitsdrücke direkt am Hydraulikgerät messen, wobei kein Lösen von Entlüftungsschrauben und Rohrverschraubungen erforderlich ist. Solche Kupplungen finden bei den verschiedensten Bauelementen und Regelungen von Hydraulik- oder Pneumatiksystemen Verwendung. Nach dem Trennen des Kupplungsanschlusses wird auf die Kupplungsbuchse mit Außengewinde eine Schutzkappe aufgeschraubt, die den Zweck hat, das Eindringen von Schmutz in die Kupplungsbuchse zu verhindern und welche darüberhinaus eine zusätzliche Abdichtungsfunktion übernimmt, für den Fall, daß ein in die Kupplungsbuchse installiertes Rückschlagventil nicht absolut dicht schließt.

Ventilkupplungen der genannten Art gehen beispielsweise aus der DE-A-27 56 084 oder DE-A-26 06 950 hervor, wobei die Ventilkörper als Kegel oder Kugeln ausgebildet sind. Bei dieser bekannten Ventilkupplung ist der Ventilkörper als Rückschlagventil auf einer Druckfeder federbeweglich angeordnet und weist an einem oberen Kontaktende einen Strömungskanal auf. Die Ventilkupplung ist dabei mit einem Dicht- und Verdrehsicherungsring versehen, dessen Dichtfunktion jedoch nur dann gewährleistet ist, wenn eine entsprechende Schlauch- oder Verschlußkappe mit ihrem Dichtnippel fest auf die Kupplungsbuchse aufgeschraubt ist.

Sobald diese Kappe gelöst ist, bzw. falls eine solche Kappe überhaupt nicht vorhanden ist — wie zum Beispiel bei Manometerwahlschaltern —, erfolgt die Abdichtung des Druckmediums nur noch durch das entsprechende Rückschlagventil. Hierzu wird beispielsweise auf die DE-B-10 01 071 verwiesen. Ein Rückschlagventil für solche Hochdruck-Ventilkupplungen zeigt jedoch konstruktionsbedingt je nach Viskosität des Druckmediums eine mehr oder weniger stark ausgeprägte Undichtheit bzw. ist unter Serienbedingungen jedenfalls nicht als praktisch dichte Ausführung darstellbar. Ein Rückschlagventil dieser Art, welches jedoch nur für geringere Drucke geeignet ist, geht aus der DE-A-14 25 600 hervor.

Für Verschlauchungen in der allgemeinen Hydraulik und für Gasfülleinrichtungen von Hydraulikspeichern ist eine derartige Ausbildung ausreichend, doch ergeben sich schon dann Reklamationen wegen Undichtheit, wenn zum Beispiel bei mehreren Ventilkupplungen gleichzeitig die Kappen gelöst werden, um mit einer Meßeinrichtung nacheinander mehrere Meßstellen zu prüfen, wenn bei Hydraulikspeichern Gasdruck-Prüfeinrichtungen ohne Nachfüllmöglichkeit benutzt werden, oder wenn die Ventilkupplungen zur Überwachung von Anlagen mit brennbaren Gasen etc. eingesetzt sind.

Zur Anwendung in Manometer-Wahlschaltern ist der Einsatz solcher Ventilkupplungen wegen ständiger Leckage an den jeweils nicht benutzten Anschlüssen überhaupt nicht möglich. Es ist bei den genannten Ventilkupplungen auch schon versucht worden, das Rückschlagventil mit gummielastischen Dichtungen bzw. üblichen O-Ringen auszustatten, jedoch konnte hierdurch trotz anfänglicher, genügender Dichtheit nicht in allen Fällen ein positives Ergebnis erzielt werden. Bei langen Meßleitungen und großen Totvolumina in Manometern oder in dem angeschlossenen Kreislauf und insbesondere bei niedrigviskosen Flüssigkeiten (= < 40 mm/sec²) oder höheren Betriebsdrücken bzw. bei Prüfeinrichtungen für Hydrospeicher erfolgt ein Auswaschen der gummielastischen Dichtung, da eine hohe Druckdifferenz beim Abheben des Ventils eine sehr starke Strömung des verwendeten Mediums an der Dichtung bewirkt.

Aus der GB-A-2 069 083 ist eine Ventilkupplung mit einem unverlierbar ausgebildeten Schraubverschluß ersichtlich. Die Dichtung der Ventilkupplung stößt im geschlossenen Zustand des Ventils gegen den Ventilkörper. Wird das Ventil geöffnet, so liegt die gesamte Druckdifferenz zwischen der Druckseite und der drucklosen Seite des Ventils an dem Teil der Ringdichtung an, der die Öffnungen im Ventilkörper freigibt. Die Gummiringdichtung beeinflußt die Druckdifferenz im Strömungskanal nicht, so daß die Dichtung nicht geschützt wird. Die Gummiringdichtung wird von der Strömung im Strömungskanal nicht beaufschlagt und ihre Dichtfunktion führt nicht dazu, daß die eigentliche Dichtung beim Aufstoßen vor einem hohen Druckgefälle geschützt wird.

Aus der US-A-2 268 020 ist ein Ventilkörper ersichtlich, welcher mit einem Flanschring versehen ist. Unmittelbar davor befinden sich Strömungskanalöffnungen, welche im geschlossenen Zustand des Ventils durch eine Dichtung abgedichtet sind. Im geschlossenen Zustand des Ventils preßt der Flanschring gegen diese Dichtung, welche gegen den Flansch des Ringes anliegt. Eine Packungsdichtung liegt zwischen dem Ring und einem Kupplungsstück und damit außerhalb des Strömungskanals.

Beim Öffnen des Ventilkörpers und Freigabe der Öffnungen durch die Dichtung, liegt die gesamte Druckdifferenz zwischen Eingang und Ausgang des Ventils an der Dichtung an, so daß diese vollständig ungeschützt ist. Die Packungsdichtung beeinflußt den Abbau der Druckdifferenz nicht und kann daher keine Schutzfunktion übernehmen.

Bei langen Meßleitungen und großen Totvolumina in Manometern oder in dem angeschlossenen Kreislauf und besonders bei niedrigviskosen Flüssigkeiten bei Prüfeinrichtungen für Hydrospeicher erfolgt ein Auswaschen der als Sitzdichtung ausgebildeten gummielastischen Dichtung, da eine sehr hohe Druckdifferenz beim Abheben des Ventils eine entsprechend starke Strömung des verwendeten Mediums an der Dichtung bewirkt.

Der Erfindung liegt somit die Aufgabe zugrunde für fluidische Systeme mit hohen Arbeitsdrücken und Medien unterschiedlicher Viskosität eine Ventilkupplung vorzuschlagen, bei der die aus einem elastomeren Werkstoff bestehende Dichtung gegen Kavitation und Auswaschungen geschützt wird und die Wirkung von großen Volumina in Meßleitungen oder dergleichen des angeschlossenen Kreislaufs auf die elastomere Dichtung vollständig ausgeschaltet wird.

Die Lösung dieses Problems erfolgt gemäß der vorliegenden Erfindung dadurch, daß bei der eingangs aufgeführten Ventilkupplung stromabwärts und/oder stromaufwärts zum aus elastomerem Werkstoff bestehenden Dichtring weitere Strömungskanal-Dichtungen angeordnet sind, welche beim Aufstoßen des Ventilkörpers ihre Dichtfunktion erst nach dem Abheben des Dichtringes von der Dichtschulter vorzugsweise verzögert beenden.

Durch diese Maßnahme nach der Erfindung wird sichergestellt, daß die aufgrund der hohen Druckdifferenz entstehende Strömung unmittelbar nach dem Ablösen des elastomeren Dichtringes von seiner Ventilschulter gedrosselt oder nahezu zum Stillstand gebracht wird.

Gemäß der Erfindung erstreckt sich die Abnahme der Dichtfunktion der stromabwärts und/oder stromaufwärts zum Dichtring angeordneten Dichtungen während des Aufstoßvorganges des Ventilkörpers im Vergleich zur Abnahme der Dichtfunktion des Dichtringes über einen längeren Hubweg. Auf diese Weise üben die stromabwärts und/oder stromaufwärts zum Dichtring angeordneten Dichtungen noch ihre Dichtfunktion aus, während aufgrund des kürzeren Hubweges des Dichtringes dieser der nachteiligen Wirkung einer sonst entstehenden Strömung und einer sich dadurch ausgebildeten Kavitation oder Auswaschung entzogen ist.

Nach der Erfindung preßt die Dichtschulter des Ventilkörpers mit ihrer Außenkante und Stirnfläche im geschlossenen Ventilzustand gegen den Dichtring und die axiale Außenfläche der Dichtschulter mit der erweiterten Bohrung der Kupplungsbuchse bildet einen Ringkanal.

Das obere Teil der Dichtbuchse bildet mit dem unteren Teil der Dichtbuchse nach der Erfindung eine Ringnut zur Aufnahme eines O-Ringes, gegen den im geschlossenen Ventilzustand ein Nippel einer Überwurfschutzkappe anliegt.

Die Drosselstrecke weist in vorteilhafter Weise einen in einer Ringnut gelagerten kavitations- und verschleißfesten Dichtring auf.

Der zylindrische Ventilkörper ist in Weiterbildung der Erfindung mit einer Axialbohrung versehen, die in radial gerichtete Bohrungen übergeht, über denen die Dichtschulter angeordnet ist und der sich die zylindrische Drosselstrecke mit einem kegelförmigen Endstück anschließt, wobei die Kupplungsbuchse zur Aufnahme der Dichtschulter eine erweiterte Bohrung aufweist.

Die Erfindung wird anhand einiger in den Zeichnungen dargestellter Ausführungsbeispiele näher erläutert. Hierbei zeigen :

Figur 1 eine Ventilkupplung im Maßstab 5 : 1, zur Hälfte im Axialschnitt im geschlossenen Zustand des Ventils ;

Figur 2 eine Ventilkupplung in einem Manometerwahlschalter im geöffneten Zustand und

Figur 3 eine weitere Ausführungsform einer Ventilkupplung im gleichen Maßstab und ebenfalls zur Hälfte im Axialschnitt im geschlossenen Zustand des Ventils.

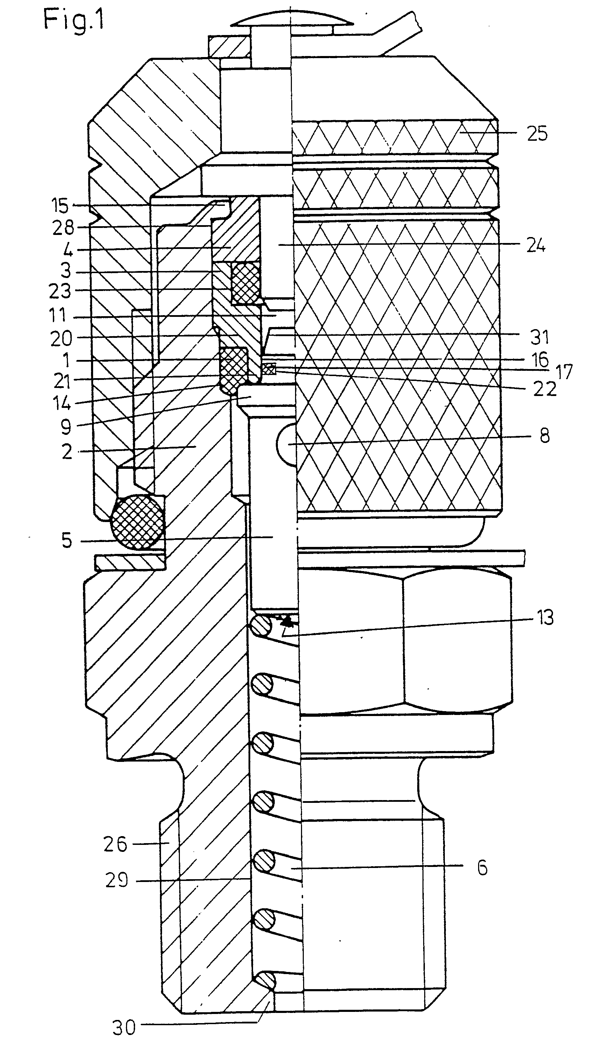

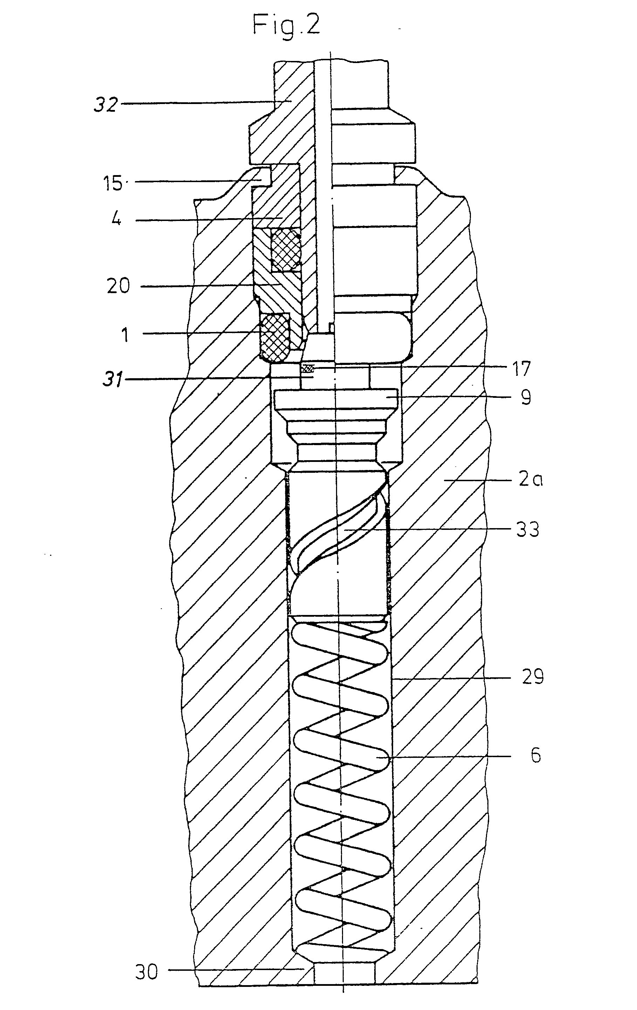

Wie aus den Figuren 1 und 2 ersichtlich ist, ist die Kupplungsbuchse 2 bzw. das Manometerwahlschalter-Gehäuse 2a mit einer Bohrung 29 versehen und nimmt die Ventilfeder 6, den darüber befindichen Ventilkörper 5 und eine aus zwei Teilen bestehende Dichtbuchse 3 auf. Die Kupplungsbuchse 2 ist an ihrem unteren Ende mit einem Außengewinde 26 versehen, so daß diese in einfacher Weise mit dem Hydraulik- oder Pneumatiksystem verbunden werden kann. Bei einem Wahlschalter-Gehäuse 2a, entsprechend Figur 2 entfällt sinngemäß das Außengewinde 26.

Der Ventilkörper 5 weist in dem in Figur 1 dargestellten Ausführungsbeispiel eine Axialbohrung 13 auf, die in radial gerichtete Bohrungen 8 übergeht. Die Ausführungsform nach Figur 2 weist statt dessen eine fertigungsgünstige Spiralnut 33 auf.

Über den Radialbohrungen 8 bzw. der Spiralnut 33 ist der Ventilkörper 5 mit einer Dichtschulter 9 versehen, der sich eine Dichtung in Form einer Drosselstrecke 16 und ein kegelförmiges Endstück 31 anschließen.

Im unteren Teil ihrer Bohrung 29 ist die Kupplungsbuchse 2 mit einem Schulterstück 30 versehen, gegen das sich die Ventilfeder 6 abstützt.

Das obere Ende der Kupplungsbuchse 2 weist dagegen einen nach der Montage gefertigten Bördelring 15 auf, der die Dichtbuchse 3 sichert. Durch diese konstruktiven Maßnahmen ist es in vorteilhafter Weise möglich, die Montage des gesamten Systems von einer Seite durchzuführen, wobei nacheinander die Feder 6, der Ventilkörper 5 und die Dichtbuchse 3 in die Bohrung 28 eingeführt werden. Nach dieser Montage erfolgt die Herstellung des Bördelringes, so daß das gesamte System in einfacher Weise fixiert ist. Um den einfachen Einbau der erforderlichen O-Ringe zu gewährleisten, ist die Dichtbuchse 3 mehrteilig ausgebildet, wobei das untere Teil 20 einen Ringsteg 21 aufweist, dessen radiale Außenseite mit der Innenwandung des Wahlschalter-Gehäuses 2a bzw. der Kupplungsbuchse 2 eine Dichtringkammer zur Aufnahme des Dichtringes 1 darstellt. Die radiale Innenseite des Ringsteges 21 bildet mit dem Ventilkörper 5 oberhalb seiner Dichtschulter 9 eine weitere Dichtung in Form einer zylindrischen Drosselstrecke 16 mit einem Drosselspalt einer definierten Länge und Breite.

Der Ringsteg 21 dient gleichzeitig als Anschlag für die Dichtschulter 9 des Ventilkörpers 5 im geschlossenen Zustand des Ventils. In diesem geschlossenen Zustand preßt die Dichtschulter 9 mit ihrer Stirnfläche bzw. Außenkante gegen den Dichtring 1, der sich in der Dichtringkammer 14 befindet. Die axiale Außenfläche der Dichtschulter 9 ist derartig dimensioniert, daß sie mit der erweiterten Bohrung der Kupplungsbuchse 2 einen Ringspalt bildet, der in einen Ringkanal 11 übergeht. Dieser Ringkanal 11 ist über die radialen Bohrungen 8 und der Axialbohrung 13 bzw. der Spiralnut 33 mit der Bohrung 31 der Kupplungsbuchse 2 strömungsmäßig verbunden.

Die zylindrische Drosselstrecke 16 des Ventilkörpers 5 kann in einer besonderen Ausführungsform der Erfindung eine Ringnut zur Aufnahme eines Dichtringes 17 aus plastischem Material, aus einem mineralfaserverstärkten Polytetrafluoräthylen oder zur Aufnahme eines Kolbenringes aus Grauguß aufweisen. Diese Dichtringe sind kavitationsfest und verschleißarm.

Das obere Teil 4 der Dichtbuchse 3 bildet mit dem unteren Teil 20 eine Ringnut 23 zur Aufnahme eines O-Ringes, gegen den im geschlossenen Zustand des Ventils nach Figur 1 ein Nippel 24 einer Überwurfschutzkappe 25 anliegt.

Wie aus der Figur 1 hervorgeht, preßt die obere Stirnfläche bzw. die Außenkante der Dichtschulter 9 im geschlossenen Ventilzustand gegen den aus einem elastomeren Werkstoff bestehenden Dichtring 1. Stromabwärts zum Dichtring 1 bildet der Ventilkörper 5 mit dem Ringsteg 21 der Dichtbuchse 3 eine in Form einer Drosselstrecke ausgebildete Dichtung 16.

Wird der Ventilkörper 5 mit Hilfe des Hohlzapfens 32 aufgestoßen, so hebt der Dichtring 1 von der Schulter 9 des Ventilkörpers 5 ab, während die als Drosselstrecke ausgebildete Dichtung 16 ihre Dichtfunktion weiterhin aufrechterhält, bis der Ringsteg 21 den kegelförmigen Teil 31 des Ventilkörpers 5 verläßt.

Wie insbesondere aus der Figur 2 deutlich hervorgeht, erstreckt sich die Abnahme der Dichtfunktion der bei diesem Ausführungsbeispiel stromaufwärts angeordneten Dichtung 16 zum Dichtring 1 während des Aufstoßvorganges des Ventilkörpers 5 mit Hilfe des Hohlzapfens 32 im Vergleich zur Abnahme der Dichtfunktion des Dichtringes 1 über einen längeren Hubweg, welcher u. a. durch die Höhe des Ringsteges 21 definiert ist. In der als Drosselstrecke ausgebildeten Dichtung 16 kann für besondere Anforderungen eine Ringnut 22 vorgesehen sein, in der sich ein Dichtring 17 befindet, der kavitations- und verschleißfest ausgebildet ist. Dieser Ring dient zur Überbrückung der Fertigungstoleranzen der metallischen Teile.

Die Vermeidung einer Strömung oder Reduzierung der Geschwindigkeit des an der Dichtung 1 vorbeiströmenden Mediums bewirkt, daß eine Auswaschung oder Kavitation dieser Dichtung verhindert wird.

Damit wird erreicht, daß das gesamte Dichtungssystem bei äußerst hohen Drücken und auch für Gase anwendbar ist, wobei durch die Zuordnung und Ausbildung der verschiedenen Dichtungen eine äußerst lange Lebensdauer sichergestellt wird.

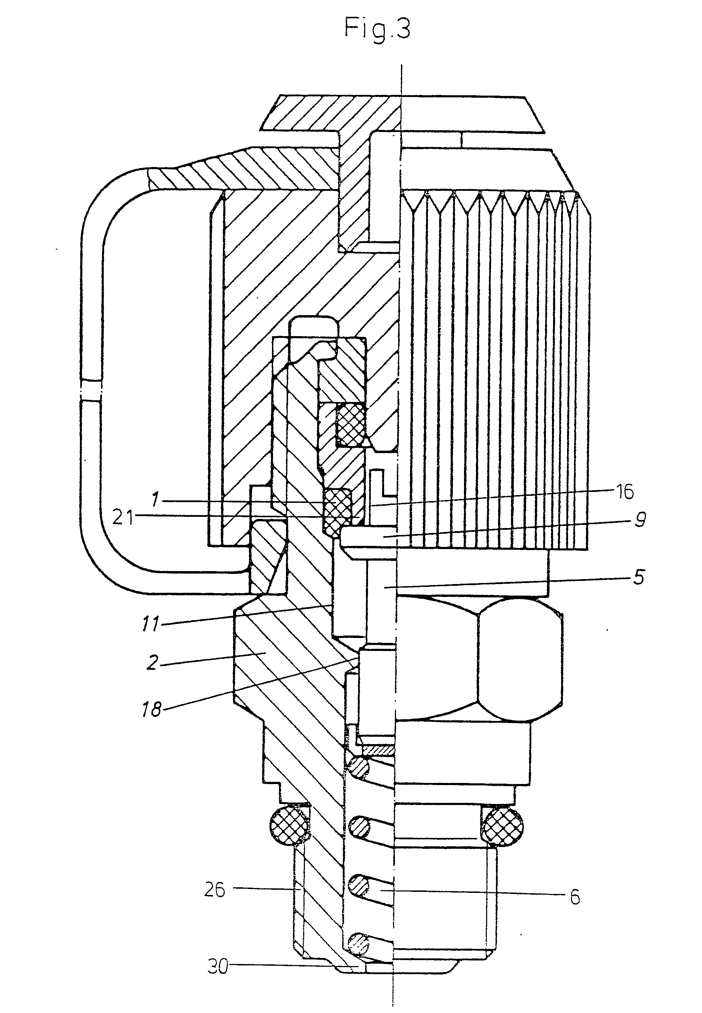

Aus der Figur 3 geht eine weitere Ausführungsform der Erfindung hervor, bei der ebenfalls, wie bei der Ausführungsform nach Figur 1, ein zylindrischer Ventilkörper 5 vorhanden ist, der mit der Stirnfläche und/oder Außenkante seiner Dichtschulter 9 im geschlossenen Ventilzustand gegen einen aus elastomeren Werkstoff bestehenden Dichtring 1 preßt. Der Ventilkörper 5 bildet mit der Kupplungsbuchse 2 einen abdichtbaren Strömungskanal 11, wobei stromaufwärts zum Dichtring 1 eine weitere Dichtung 18 angeordnet ist, welche beim Aufstoßen des Ventilkörpers 5 ihre Dichtfunktion erst nach dem Abheben des Dichtringes 1 von der Dichtschulter 9 verzögert beendet. Damit stellt die Ausführungsform nach der Figur 3 bezüglich der Zuordnung der Dichtung 18 zur Dichtung 1 die sich ergebende Umkehrung dar, welche im übrigen die gleiche Wirkungsweise aufzeigt, wie die Ausführungsform nach den Figuren 1 und 2.

In einer nicht näher dargestellten Ausführungsform können auch die nach den Figuren 1 bzw. 2 und 3 dargestellten Ausführungsformen miteinander kombiniert werden, derart, daß sowohl stromabwärts als auch stromaufwärts zum Dichtring 1 weitere Dichtungen angeordnet sind, die ihrerseits als Dichtkombinationen ausgebildet sein können, beispielsweise einer Drosselstrecke oder Labyrinthdichtung in Kombination mit Dichtringen. In allen Ausführungsformen ist der Dichtring 1 aus einem Elastomer hergestellt, während die bei den Dichtungen 16, 17 und 18 verwendeten Dichtringe aus einem kavitationsfesten Material bestehen.

## Patentansprüche

1. Ventilkupplung, insbesondere Ventil-Meßkupplung für fluidische Systeme mit hohen Arbeitsdrücken, bestehend aus einer unter Leitungsdruck stehenden Kupplungsbuchse (2), in deren Bohrung ein federbelastetes und mechanisch betätigbares Rückschlagventil mit einem zylindrischen Ventilkörper (5) angeordnet ist, welcher mit der Außenkante und/oder Stirnfläche seiner Dichtschulter (9) im geschlossenen Ventilzustand gegen einen Dichtring (1) preßt, der mit der Kupplungsbuchse (2) bzw. einer in der Kupplungsbuchse angeordneten Dichtbuchse (3) einen abdichtbaren Strömungskanal bildet, dadurch gekennzeichnet, daß stromabwärts und/oder stromaufwärts zum aus elastomerem Werkstoff bestehenden Dichtring (1) weitere Strömungskanal-Dichtungen (16, 17, 18) angeordnet sind, welche beim Aufstoßen des Ventilkörpers (5) ihre Dichtfunktion erst nach dem Abheben des Dichtringes (1) von der Dichtschulter (9) vorzugsweise verzögert beenden.

2. Ventilkupplung nach Anspruch 1, dadurch gekennzeichnet, daß die Abnahme der Dichfunktion der stromabwärts und/oder stromaufwärts angeordneten Dichtungen (16, 17, 18) zum Dichtring (1) während des Aufstoßvorganges des Ventilkörpers (5) im Vergleich zur Abnahme der Dichtfunktion des Dichtringes (1) sich über einen längeren Hubweg erstreckt.

3. Ventilkupplung nach Anspruch 1 oder 2, dadurch gekennzeichnet, daß die Dichtungen (16, 18) als Drosselstrecken und/oder Labyrinthdichtungen ausgebildet sind.

4. Ventilkupplung nach Anspruch 1, 2 oder 3, dadurch gekennzeichnet, daß die Dichtungen (16, 18) jeweils einen in einer Ringnut (22) gelagerten kavitations- und verschleißfesten Dichtring (17) aufweisen.

5. Ventilkupplung nach einem der Ansprüche 1 bis 4, dadurch gekennzeichnet, daß der zylindrische Ventilkörper (5) eine Axialbohrung (13) aufweist, die in radial gerichtete Bohrungen (8) übergeht, über denen die Dichtschulter (9) angeordnet ist und der sich die zylindrische Drosselstrecke (16) mit einem kegelförmigen Endstück (31) anschließt und daß die Kupplungsbuchse (2) zur Aufnahme der Dichtschulter (9) eine erweiterte Bohrung (28) aufweist.

6. Ventilkupplung nach einem der Ansprüche 1 bis 5, dadurch gekennzeichnet, daß die Kupplungsbuchse (2) im unteren Teil ihrer Bohrung (29) ein Schulterstück (30) aufweist, gegen das sich die Ventilfeder (6) abstützt, während das obere Ende der Kupplungsbuchse (2) einen nach der Montage gefertigten, die Dichtbuchse (3) sichernden Bördelring (15) aufweist.

7. Ventilkupplung nach einem der Ansprüche 1 bis 6, dadurch gekennzeichnet, daß die Dichtbuchse (3) mehrteilig ausgebildet ist, wobei das untere Teil (20) einen Ringsteg (21) aufweist, dessen radiale Außenseite mit der Innenwandung der Kupplungsbuchse (2) eine Dichtringkammer zur Aufnahme des Dichtringes (1) bildet und dessen radiale Innenseite die äußere Begrenzung der Dichtung (16) darstellt.

8. Ventilkupplung nach einem der Ansprüche 1 bis 7, dadurch gekennzeichnet, daß der Ringsteg (21) als Anschlag für die Dichtschulter (9) des Ventilkörpers (5) ausgebildet ist.

9. Ventilkupplung nach Anspruch 8, dadurch gekennzeichnet, daß die Dichtschulter (9) des Ventilkörpers (5) mit ihrer Außenkante und Stirnfläche im geschlossenen Ventilzustand gegen den Dichtring (1) preßt und die axiale Außenfläche der Dichtschulter (9) mit der erweiterten Bohrung (11) der Kupplungsbuchse (2) einen Ringkanal bildet.

10. Ventilkupplung nach Anspruch 1 oder 2, dadurch gekennzeichnet, daß das obere Teil (4) der Dichtbuchse (3) mit dem unteren Teil (20) der Dichtbuchse (3) eine Ringnut (23) zur Aufnahme eines O-Ringes bildet, gegen den im geschlossenen Ventilzustand ein Nippel (24) einer Überwurfschutzkappe (25) anliegt.

## Claims

1. Valve fitting, in particular valve measuring fittings for fluidic systems with high operating pressures, consisting of a connector bushing (2) under line pressure and a spring loaded and mechanically actuated non-return valve comprising a cylindrical valve body (5) arranged in the bore of the connector bushing, the valve body (5) of which having in the closed state of the valve an outer edge and/or frontal surface of its packing shoulder (9) pressing against a sealing ring (1), forming a sealable flow channel with the connector bushing (2) or a sealing liner (3), characterized by further seals (16, 17, 18) arranged downstream and/or upstream from the elastomeric sealing ring (1), which terminate their sealing function upon the impact of the valve body (5) only after the sealing ring (1) is lifted from the packing shoulder (9) preferably in a delayed manner.

2. Valve fitting according to claim 1, characterized that the decrease in the sealing function of the seals (16, 17, 18) arranged downstream and/or upstream from the sealing ring (1) during the opening process of the valve body (5) extends over a longer path compared to the decrease in the sealing function of the sealing ring (1).

3. Valve fitting according to claim 1 or 2, characterized that the seals (16, 18) has the configuration of throttling paths and/or labyrinth seals.

4. Valve fitting according to claim 1, 2 or 3, characterized that the seals (16, 18) comprising an annular groove (22) and a cavitation and wear resistant gasket located in said annular groove.

5. Valve fitting according to one of the claims 1 to 4, characterized that the cylindrical valve body (5) comprising an axial bore (13) passing into radially oriented bores (8), wherein the packing shoulder (9) is arranged above said radial bores followed by the cylindrical throttling path (16) with a conical end piece (31) and wherein the connector bushing (2) has an expanded bore (28) to receive the packing shoulder (9).

6. Valve fitting according to one of the claims 1 to 5, characterized that the connector bushing (2) comprising a shoulder piece (30) in the lower part of said bore wherein a valve spring (6) is biased against said shoulder piece (30) whereas the upper end of the connector bushing (2) is comprising a flanged ring (15) securing the sealing liner (3).

7. Valve fitting according to one of the claims 1 to 6, characterized that the sealing liner (3) comprises several parts wherein a lower part (20) has an annular ridge (21), the radially outer side of said ridge together with the inner wall of the connector bushing (2) forming a gasket ring-chamber to receive the sealing ring (1) and the radially inner side of said ridge forming the outer border of the sealing (16).

8. Valve fitting according to one of the claims 1 to 7, characterized that the annular ridge (21) is designed as the stop for said packing shoulder (9) of the cylindrical valve body.

9. Valve fitting according to claim 8, characterized that in the closed position of the valve the outer ridge and frontal surface of the packing shoulder (9) of the valve body (5) is pressing against the sealing ring (1) whereas the axially outer surface of the packing shoulder (9) forms an annular channel with the expanded bore (11) of the connector bushing (2).

10. Valve fitting according to claim 1 or 2, characterized that the upper part (4) of the sealing liner (3) forms an annular groove (23) with the lower part (20) of the sealing liner (3) to receive an O-ring, whereas a nippel (24) of a protective union cap nut engaging said O-ring when the valve is in the closed position.

## Revendications

1. Raccord à soupape, en particulier, raccord de mesure à soupape pour systèmes fluidiques subissant de hautes pressions de travail, ce raccord étant constitué d'une douille de raccord (2) subissant la pression de canalisation et dans le passage de laquelle est disposée une soupape de retenue, sollicitée par un ressort et pouvant être actionnée mécaniquement, à un corps de soupape cylindrique (5) qui, lorsque la soupape est fermée, est pressé par le bord extérieur et/ou la face frontale de son épaulement d'étanchéité (9), contre une bague d'étanchéité (1) qui forme un canal d'écoulement pouvant être étanche (11) avec la douille de raccord (2) ou une douille d'étanchéité (3) disposée dans la douille de raccord, caractérisée en ce que, en aval et/ou en amont de la bague d'étanchéité (1) constituée d'une matière élastomère, sont disposés d'autres joints (16, 17, 18) d'étanchéité du canal d'écoulement qui, lors du refoulement du corps de soupape (5) n'achèvent leur fonction d'étanchement que lorsque la bague d'étanchéité (1) s'est séparée de l'épaulement d'étanchéité (9), de préférence avec un certain retard.

2. Raccord à soupape suivant la revendication 1, caractérisé en ce que la cessation de la fonction d'étanchement des joints étanches (16, 17, 18) disposés en aval et/ou en amont vis-à-vis de la bague d'étanchéité (1) pendant le processus de refoulement du corps de soupape (5) s'étend sur une plus longue course de levée comparativement à la cessation de la fonction d'étanchement de la bague d'étanchéité (1).

3. Raccord à soupape suivant la revendication 1 ou 2, caractérisé en ce que les joints étanches (16, 18) sont réalisés sous forme de zones à étranglement et/ou de joints à labyrinthe.

4. Raccord à soupape suivant la revendication 1, 2 ou 3, caractérisé en ce que les joints étanches (16, 18) comportent chacun une bague d'étanchéité (17) résistant à l'usure et à la cavitation et installée dans une rainure annulaire (22).

5. Raccord à soupape suivant l'une des revendications 1 à 4, caractérisé en ce que le corps de soupape cylindrique (5) comporte un passage axial (13) qui se transforme en passages (8) dirigés radialement, au-dessus desquels est disposé l'épaulement d'étanchéité (9) qui se raccorde par la rainure d'étanchéité (16), réalisée sous forme d'une zone d'étranglement cylindrique, à une pièce en bout conique (31), et en ce que la douille de raccord (2) comporte un passage élargi (28) destiné à recevoir l'épaulement d'étanchéité (9).

6. Raccord à soupape suivant l'une des revendications 1 à 5, caractérisé en ce que, dans la partie inférieure de son passage (29), la douille de raccord (2) comporte une pièce à épaulement (30) contre laquelle vient prendre appui le ressort de soupape (6), tandis que l'extrémité supérieure de la douille de raccord (2) comporte un anneau bordé (15) réalisé après le montage et assujettissant la douille d'étanchéité (3). ·

7. Raccord à soupape suivant l'une des revendications 1 à 6, caractérisé en ce que la douille d'étanchéité (3) est réalisée en plusieurs parties, la partie inférieure (20) comportant une nervure annulaire (21) dont la face extérieure radiale forme, avec la paroi intérieure de la douille d'accouplement (2), une chambre annulaire d'étanchéité destinée à recevoir la bague d'étanchéité (1) et dont la face intérieure radiale constitue la limite extérieure du joint étanche (16).

8. Raccord à soupape suivant l'une des revendications 1 à 7, caractérisé en ce que la nervure annulaire (21) est réalisée sous forme d'une butée pour l'épaulement d'étanchéité (9) du corps de soupape (5).

9. Raccord à soupape suivant la revendication 8, caractérisé en ce que, lorsque la soupape est fermée, l'épaulement d'étanchéité (9) du corps de soupape (5) est pressé, avec son bord extérieur et sa face frontale, contre la bague d'étanchéité (1), tandis que la surface extérieure axiale de l'épaulement d'étanchéité (9) forme un canal annulaire avec le passage élargi (11) de la douille d'accouplement.

10. Raccord à soupape suivant la revendication 1 ou 2, caractérisé en ce que la partie supérieure (4) de la douille d'étanchéité (3) forme, avec la partie inférieure (20) de la douille d'étanchéité (3), une rainure annulaire (23) destinée à recevoir un joint torique contre lequel vient s'appliquer un mamelon (24) d'un chapeau de protection (25) lorsque la soupape est fermée.

Fig.1

0 094 439

## Fig.2

Fig.3